# EUROPÄISCHE PATENTSCHRIFT

(11) **EP 1 972 483 B1**
(45) Veröffentlichungstag und Bekanntmachung des Hinweises auf die Patenterteilung: **20.08.2014**
(21) Anmeldenummer: 08003088.5
(22) Anmeldetag: 20.02.2008
(51) Int. Cl.: B60H 1/00, G02B 27/01

(54) **Fahrzeug mit einem Head-Up-Display**
Vehicle with a head-up-display
Véhicule doté d'un visionneur tête haute

(30) Priorität: 19.03.2007 DE 102007012905
(43) Veröffentlichungstag der Anmeldung: 24.09.2008
(73) Patentinhaber: Bayerische Motoren Werke Aktiengesellschaft, 80809 München (DE)
(72) Erfinder: Brügl, Jürgen, 81669 München (DE)

(56) Entgegenhaltungen:
- EP-A- 0 377 773
- WO-A-2005/098513
- DE-A1-102005 031 357
- JP-A- 9 039 606
- JP-A- 2003 118 426
- JP-A- 2003 300 426

## Beschreibung

Die Erfindung betrifft ein Fahrzeug mit einer Tragstruktur und einem Head-Up-Display. Ferner betrifft die Erfindung ein Fahrzeug mit einem Head-Up-Display, sowie ein Head-Up-Display eines Fahrzeugs.

Head-Up-Displays werden bei heutigen Fahrzeugen, insbesondere bei Personenkraftwagen, vorteilhaft aber auch bei Flugzeugen, dazu verwendet insbesondere an die Windschutzscheibe des Fahrzeugs Informationen zu projizieren, welche dort für den Fahrer des Fahrzeugs erkennbar sind, ohne dass dieser den Blick von der von ihm zu beobachtenden Fahrbahn abwenden muss.

Head-Up-Displays weisen dazu eine insbesondere Licht ausstrahlende Projektionseinrichtung auf, die im Betrieb erhebliche Mengen Abwärme erzeugt. Diese Abwärme gilt es abzuführen, wozu spezielle Kühlkörper an den bekannten Head-Up-Displays vorgesehen werden.

Ferner ist der Bauraum bei bekannten Fahrzeugen im Montagebereich des Head-Up-Displays besonders eng begrenzt. In diesem Bereich sind nämlich ferner so genannte Kombi-Instrumente (welche insbesondere Tachometer, Drehzahlanzeige und Tankanzeige umfassen), Lüftungskanäle, Teile des Kabelbaums, die Lenksäule und Teile der Tragstruktur des Fahrzeugs (nämlich insbesondere die Stirnwand und ein Lenksäulentragrohr) anzuordnen. Es gibt daher Fälle, in denen ein Head-Up-Display nur nach erheblicher Umkonstruktion eines Fahrzeugs angeordnet werden kann. Oft müssen dabei erhebliche Kompromisse im Hinblick auf die Lüftungsleistung, die Zugänglichkeit des Head-Up-Displays und den Blickwinkel auf das Kombi-Instrument eingegangen werden. In einzelnen Fällen ist sogar ein Angebot eines Fahrzeugs mit einem integrierten Head-Up-Display in wirtschaftlich sinnvollem Rahmen überhaupt nicht möglich.

Aus JP-A-09039606 ist ein Fahrzeug mit einem Head-Up-Display bekannt, das an einem Luftführungskanal der Lüftung des Fahrzeugs angeordnet ist. Der Luftführungskanal ist aus Kunststoff gestaltet und weist einen Rücksprung auf, in dem das Head-Up-Display mit gewissem Abstand zum Luftführungskanal angeordnet und ortsfest gehalten ist.

Es ist eine Aufgabe der Erfindung ein Fahrzeug mit einem Head-Up-Display und ein Head-Up-Display eines Fahrzeugs zu schaffen, mit dem die oben genannten Nachteile überwunden sind und insbesondere eine bauraumsparende Anordnung eines Head-Up-Displays möglich ist.

Die Aufgabe ist gemäß der Erfindung mit einem Fahrzeug gemäß Anspruch 1 gelöst. Vorteilhafte Weiterbildungen der Erfindung sind in den abhängigen Ansprüchen 2 und 3 beschrieben.

Erfindungsgemäß ist ein Fahrzeug mit einer Tragstruktur und einem Head-Up-Display geschaffen, bei dem das Head-Up-Display mit mindestens einem seiner Bauteile an der Tragstruktur des Fahrzeugs wärmeleitend angekoppelt ist. Gemäß der Erfindung kann dadurch ein bisher erforderlicher Kühlkörper am Head-Up-Display entfallen. Gemäß der Erfindung ist das Head-Up-Display derart an die Tragstruktur des Fahrzeugs angekoppelt, dass im Betrieb des Head-Up-Displays gezielt Wärme auf die Tragstruktur abgeführt wird und diese neben der eigentlichen Stützfunktion eine Kühlfunktion für das Head-Up-Display übernimmt.

Die Wärmequelle eines bekannten Head-Up-Displays ist vor allem das so genannte Backlight, mit beispielsweise einer relativen thermischen Verlustleistung von ca. 30 W (Watt). Die maximal zulässige Temperatur am Backlight ist dabei beispielsweise ca. 120 °C (Grad Celsius). Da bekannte Head-Up-Displays in einem unbelüfteten Raum verbaut sind, muss diese thermische Leistung über Radiation vom Kühlkörper des Head-Up-Displays abgeführt werden. Mittels Radiation werden aber nur vergleichsweise geringe Wirkungsgrade erzielt. Daher müssen bekannte Kühlkörper entsprechend mit einer großen Masse von ca. 1100 g (Gramm) und aus einem gut wärmeleitenden Material, insbesondere Aluminium, ausgebildet werden. Dies führt zu erheblichen Gewichts-, Package- und Kostennachteilen bekannter Head-Up-Displays.

Bei dem erfindungsgemäßen Head-Up-Display kann die thermische Energie hingegen sehr gut durch Konduktion abgeleitet werden. Dadurch wird erreicht, die am Head-Up-Display entstehende Wärmeenergie an ein dem Head-Up-Display benachbartes und beim Fahrzeug ohnehin vorhandenes, massives Metallteil abzuführen.

Zur verbesserten Wärmeenergieableitung zwischen dem erfindungsgemäß angekoppelten Bauteil des Head-Up-Displays und dem zugehörigen Abschnitt der Tragstruktur des Fahrzeugs ist es dabei gemäß der Erfindung bevorzugt eine Wärmeleitpaste und/oder eine Wärmeleitfolie und/oder eine Heat-Pipe vorzusehen und dadurch für einen guten Wärmetransfer zu sorgen.

Die erfindungsgemäße Ankopplung des Head-Up-Displays erfolgt besonders bevorzugt an der Tragstruktur zwischen der Lenksäulenanbindung und der Stirnwand des Fahrzeugs, wobei vorliegend unter Stirnwand jene Wand der Karosse eines Fahrzeugs verstanden wird, welche den Fußraum der vordersten Sitze in Hauptfahrtrichtung nach vorne hin abschließt. Es ist daher erfindungsgemäß vorgesehen, dass der Abschnitt der Tragstrukur, an dem das Head-Up-Display mit mindestens einem seiner Bauteile an der Tragstruktur des Fahrzeugs wärmeleitend angekoppelt, ferner dazu eingerichtet ist, eine Lenksäule des Fahrzeugs zu stützen. Dieser Bereich wird auch als Tragstruktur der Lenksäule oder als Anbindung zwischen dem Tragrohr und der Stirnwand (so genannte Anbindung Tragrohr/Stirnwand) bezeichnet.

Um gemäß dem erfindungsgemäßen Grundgedanken eine Wärmeenergieabfuhr vom Head-Up-Display ohne ein dafür besonders am Head-Up-Display eigens anzuordnendes Kühlelement zu erreichen, ist es gemäß der Erfindung ferner vorgesehen die Tragstruktur im Bereich der wärmeleitenden Ankopplung des mindestens einen Bauteils des Head-Up-Displays dazu einzurichten, dass Sie als Luftführungskanal für Kühl- und/oder Heizluft des Fahrzeugs dient.

Auf diese Weise kann gerade in jenen Situationen, in denen eine erhöhte Kühlleistung am Head-Up-Display erforderlich ist, für eine effiziente und zugleich Bauraum und Kosten sparende Kühlung eines Head-Up-Displays eines Fahrzeugs gesorgt werden. Situationen erhöhter Leistung ergeben sich nämlich besonders an Wintertagen, bei geschlossener Schneedecke und tief stehender Sonne. An solchen Tagen wird bei Fahrzeugen bekanntlich in der Regel die Fahrzeugklimaanlage betrieben (oder sie kann zumindest unproblematisch betrieben werden), so dass entsprechend Luft durch die zugehörigen Luftführungskanäle gefördert und gemäß der erfindungsgemäßen Lösung zur Kühlung eines Head-Up-Displays genutzt werden kann. Auch in Fällen, in denen die Fahrbahn nass ist und besonders spiegelt ist diese erfindungsgemäße Art der Kühlung besonders effektiv. In Zeiten, in denen mit der Klimaanlage des Fahrzeugs gekühlte Luft erzeugt und durch die Luftführungskanäle gefördert wird, ist die Kühlleistung am Head-Up-Display sogar besonders hoch. Aber selbst bei Zufuhr von erwärmter Heizluft in einen Innenraum des Fahrzeugs, insbesondere einen Fahrgastraum, ergibt sich eine erhebliche Kühlleisung am Head-Up-Display, da dieses in der Regel noch immer zumindest bis zu ca. 40 °C wärmer ist, als die wärmste Heizluft.

Im Hinblick auf die vorgegebene Einbausituation und eine montagetechnisch möglichst einfache Anbringung eines Head-Up-Displays ist es besonders von Vorteil als Luftführungskanal zum Kühlen des Head-Up-Displays jenen Luftführungskanal zu verwenden (d.h. abzuzweigen, umzulenken oder durch das Head-Up-Display zu führen), der zum Zuführen von Luft zu einer Seitenscheibe des Fahrzeugs dient.

Wie oben erläutert haben Überschlagsrechnungen ergeben, dass die bestehende Größe der Tragstruktur eines Fahrzeugs insbesondere in dem zum Fahrgastraum gerichteten Bereich von dessen Stirnwand ausreichend groß ist, um bekannte Kühlkörper von Head-Up-Displays zu ersetzen.

Darüber hinaus kann erfindungsgemäß das Head-Up-Display insgesamt durch die erfindungsgemäß gestaltete Zwangskühlung im Hinblick auf Gewicht, Bauraum und Kosten weiter optimiert werden. Insbesondere kann durch die erfindungsgemäße Ankopplung eines Head-Up-Displays für dieses eine neue Form gewählt werden.

Nachfolgend wird ein Ausführungsbeispiel der erfindungsgemäßen Lösung anhand der beigefügten schematischen Zeichnungen näher erläutert. Es zeigt:
Fig. 1 eine vereinfachte Seitenansicht eines Head-Up-Displays gemäß dem Stand der Technik,
Fig. 2 eine Seitenansicht der Einbausituation mit einem Head-Up-Display gemäß dem Stand der Technik,
Fig. 3 eine Draufsicht der Einbausituation gemäß Fig. 2,
Fig. 4 eine vereinfachte Seitenansicht eines Head-Up-Displays,
Fig. 5 eine Seitenansicht der hier nicht beanspruchten Einbausituation eines Head-Up-Displays gemäß Fig. 4,
Fig. 6 eine Draufsicht der Einbausituation gemäß Fig. 5,
Fig. 7 eine Seitenansicht der Einbausituation eines Ausführungsbeispiels der erfindungsgemäßen Lösung mit einem Head-Up-Display gemäß Fig. 4 und
Fig. 8 eine Draufsicht der Einbausituation gemäß Fig. 7.

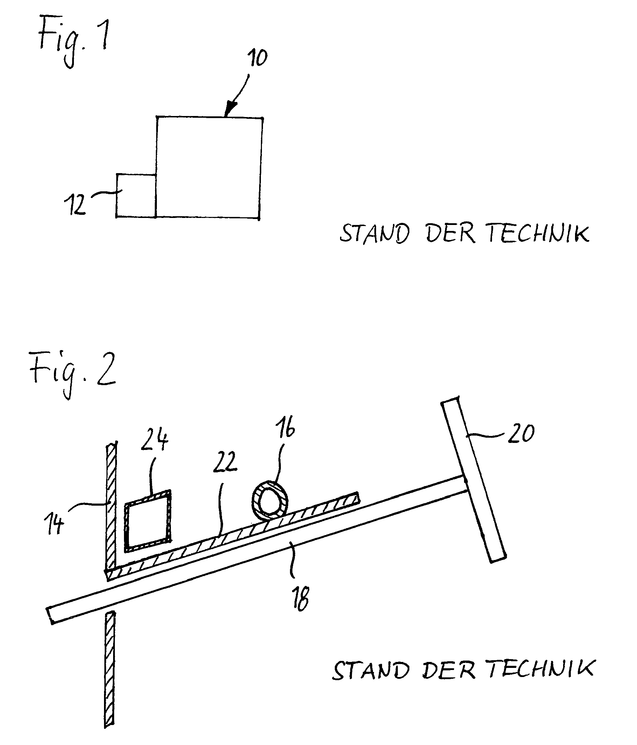

In Fig. 1 ist ein Head-Up-Display 10 des Standes der Technik vereinfacht dargestellt, welches im Wesentlichen ein quaderförmiger Körper ist. Das Head-Up-Display 10 dient zum Projizieren von Informationen an die Innenseite einer Windschutzscheibe eines Fahrzeugs, insbesondere eines Personenkraftwagens. Während des Betriebs erzeugt das Head-Up-Display 10 eine erhebliche Menge Abwärme, die aus Gründen der Betriebssicherheit vom Head-Up-Display 10 abgeführt werden muss. Das Head-Up-Display 10 des Standes der Technik weist dazu an einer seiner Außenseiten einen gesondert Kühlkörper 12 auf.

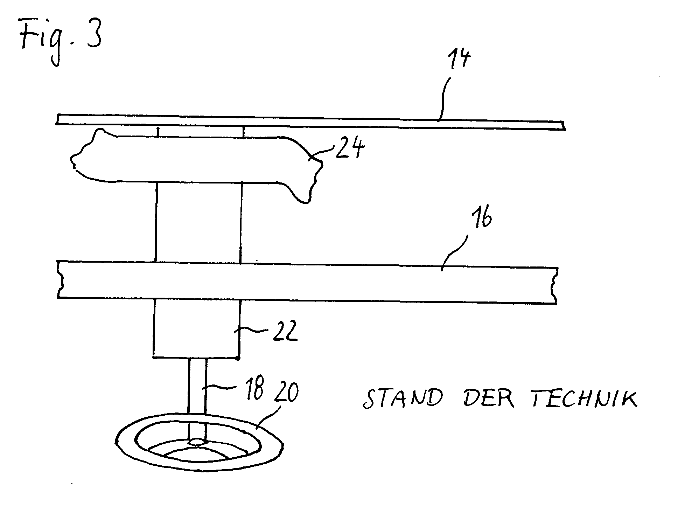

Ferner muss das Head-Up-Display 10 gemäß dem Stand der Technik in für die Projektion geeigneter Weise unter der Windschutzscheibe im Bereich zwischen einer Stirnwand 14 und einem Tragrohr 16 angeordnet werden (siehe Fig. 2 und 3). Das Tragrohr 16 dient zum im Wesentlichen ortsfesten Haltern einer Lenksäule 18 mit einem darauf angebrachten Lenkrad 20. Dazu ist zwischen dem der Stirnwand 14 und dem Tragrohr 16 eine Tragstruktur 22 vorgesehen. Die Stirnwand 14 und das Tragrohr 16 sind beides Elemente der weiter nicht dargestellten Karosse des Fahrzeugs, so dass ihre Anordnung bei der Einbindung des Head-Up-Diplays 10 in das in der Regel ja bereits fertig auskonstruierte Fahrzeug entsprechend nicht verändert werden soll oder kann.

Der Bauraumbedarf des bekannten Head-Up-Display 10 ist dabei derart groß, dass eine Unterbringung unter den derzeit bestehenden Umständen nicht oder nur mit erheblicher Umkonstruktion an der Karosse möglich ist. Diese Situation wird weiter durch einen Luftkanal 24 einer weiter nicht dargestellten Klimaanlage des Fahrzeugs erschwert, der ebenfalls in diesem Bauraumbereich quer zur Lenksäule 18 entlang geführt ist.

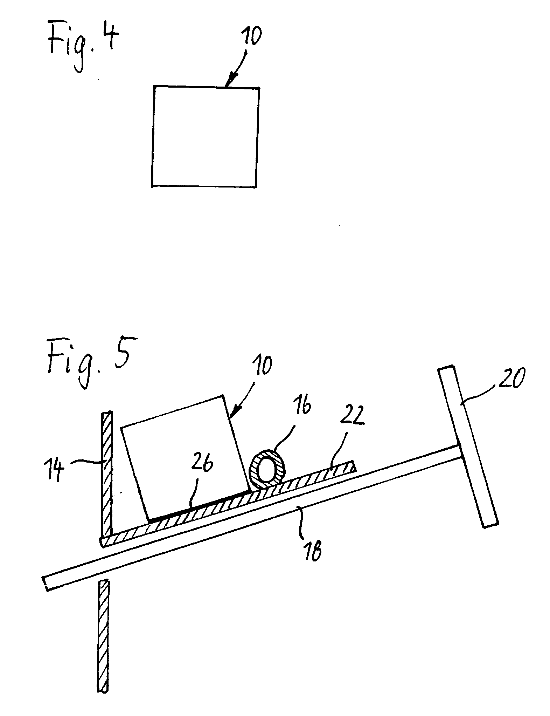

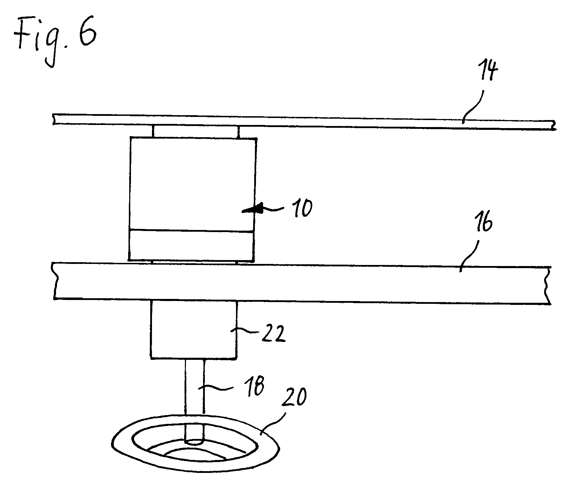

In den Fig. 4 bis 8 sind Head-Up-Displays 10 dargestellt, bei denen insbesondere der gemäß dem Stand der Technik vorgesehene gesonderte Kühlkörper 12 weggelassen worden ist.

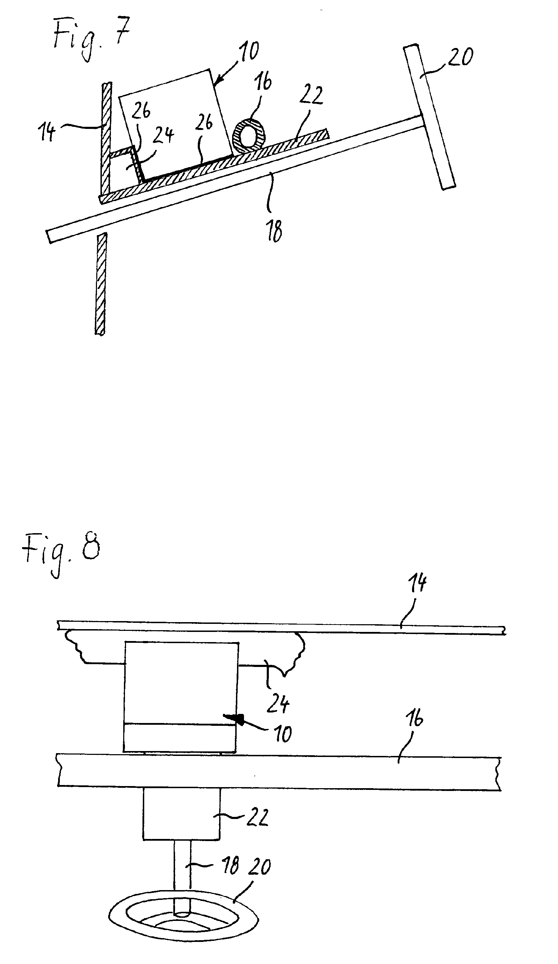

Um dennoch die erforderliche Kühlleistung am Head-Up-Display 10 zu erzielen, ist dieses mit einem wärmeleitend gestalteten Ankoppelbereich 26 an die Tragstruktur 22 der Lenksäule 18 angekoppelt, so dass diese Tragstruktur 22 Wärmeenergie vom Head-Up-Display 10 gezielt abführt und als dessen Kühlkörper wirkt (siehe Fig. 5 und 7).

Bei dem Ausführungsbeispiel gemäß den Fig. 7 und 8 ist das Head-Up-Display 10 ferner an den Luftkanal 24 der Klimaanlage wärmeleitend angekoppelt, derart, dass dieser Luftkanal 24 seinerseits einen Teil der Tragstruktur 22 bildet und dadurch über seine Wandung Wärmeenergie des Head-Up-Displays 10 an die durch ihn hindurchströmende Luft abführt.

### Bezugszeichenliste

- 10: Head-Up-Display
- 12: Kühlkörper
- 14: Stirnwand
- 16: Tragrohr
- 18: Lenksäule
- 20: Lenkrad
- 22: Tragstruktur der Lenksäule
- 24: Luftkanal
- 26: Ankoppelbereich

## Patentansprüche

1. Fahrzeug mit einer Tragstruktur (22) und einem Head-Up-Display (10), bei dem das Head-Up-Display (10) mit mindestens einem seiner Bauteile an der Tragstruktur (22) des Fahrzeugs wärmeleitend angekoppelt ist (26), und bei dem die Tragstruktur (22) im Bereich der wärmeleitenden Ankopplung (26) des mindestens einen Bauteils des Head-Up-Displays (10) ferner dazu eingerichtet ist, als Luftführungskanal (24) für Kühl- und/oder Heizluft des Fahrzeugs zu dienen,
**dadurch gekennzeichnet, dass** der Abschnitt der Tragstrukur (22), an dem das Head-Up-Display (10) mit mindestens einem seiner Bauteile an der Tragstruktur (22) des Fahrzeugs wärmeleitend angekoppelt ist, ferner dazu eingerichtet ist, eine Lenksäule (18) des Fahrzeugs zu stützen.

2. Fahrzeug nach Anspruch 1, bei dem im Bereich der wärmeleitenden Ankopplung (26) des mindestens einen Bauteils des Head-Up-Displays (10) eine Wärmeleitpaste und/oder eine Wärmeleitfolien und/oder eine Heat-Pipe angeordnet ist.

3. Fahrzeug nach Anspruch 1 oder 2,bei dem der Luftführungskanal (24) zum Zuführen von Luft zu einer Seitenscheibe des Fahrzeugs dient.

## Claims

1. A vehicle comprising a bearing structure (22) and a head-up display (10) wherein at least one component of the head-up display (10) is coupled in heat-conducting manner (26) to the bearing structure (22) on the vehicle and wherein, near the heat-conducting coupling (26) of the at least one component of the head-up display (10), the bearing structure (22) is also designed as a duct (24) for supplying cooling and/or heating air to the vehicle,
**characterised in that** the portion of the bearing structure (22) at which at least one component of the head-up display (10) is coupled in heat-conducting manner to the bearing structure (22) on the vehicle, is also constructed so as to brace a steering column (18) of the vehicle.

2. A vehicle according to claim 1, wherein a heat-conducting paste and/or heat-conducting foils and/or a heat pipe is disposed in the region of the heat-conducting coupling (26) of at least one component of the head-up display (10).

3. A vehicle according to claim 1 or claim 2, wherein the duct (24) is used for supplying air to a side window of the vehicle.

## Revendications

1. Véhicule comportant une structure de support (22) et un visionneur tête haute (10), le visionneur tête haute (10) étant couplé (26) par au moins l'une de ses pièces à la structure de support (22) du véhicule par un couplage thermo-conducteur et la structure de support (22) dans la région du couplage thermo-conducteur (26) du composant du visionneur tête haute (10) étant en outre conçue comme canal de passage d'air (24) pour de l'air de refroidissement et/ou de chauffage du véhicule,
**caractérisé en ce que**
le segment de la structure de support (22) du véhicule auquel est couplé le visionneur tête haute (10) par au moins l'un de ses composants, par un couplage thermo-conducteur est en outre conçu pour soutenir la colonne de direction (18) du véhicule.

2. Véhicule selon la revendication 1,
**caractérisé en ce que**
la région du couplage thermo-conducteur (26) d'au moins un composant du visionneur tête haute (10), comporte une pâte thermo-conductrice et/ ou un film thermo-conducteur et/ ou un caloduc.

3. Véhicule selon la revendication 1 ou 2
**caractérisé en ce que**
le canal de passage d'air (24) sert à fournir de l'air à une vitre latérale du véhicule.
